## Europäisches Patentamt

(19) **European Patent Office**

**Office européen des brevets**

(11) Veröffentlichungsnummer: **0 015 391**
**B1**

(12) **EUROPÄISCHE PATENTSCHRIFT**

(45) Veröffentlichungstag der Patentschrift:
**19.10.83**

(51) Int. Cl.³: **H 01 J 17/44,** G 01 J 3/10

(21) Anmeldenummer: **80100571.1**

(22) Anmeldetag: **05.02.80**

(54) Glimmentladungslampe zur qualitativen und quantitativen Spektralanalyse.

(30) Priorität: **03.03.79 DE 2908350**

(43) Veröffentlichungstag der Anmeldung:
**17.09.80 Patentblatt 80/19**

(45) Bekanntmachung des Hinweises auf die Patenterteilung:
**19.10.83 Patentblatt 83/42**

(84) Benannte Vertragsstaaten:
**AT BE CH DE FR GB IT LU NL SE**

(56) Entgegenhaltungen:
EP-A-0 004 962
DE-A-1 944 882
US-A-3 502 863
US-A-3 543 077
US-A-3 833 829
SPECTROCHIMICA ACTA, Band 27B, Nr. 12,
Dezember 1972, Seiten 537—544 Nord Ireland J.
MAIERHOFER et al.: »Eine programmgesteuerte
Hohlkathodenanlage für die Emissionsspektralanalyse — Teil I«

(73) Patentinhaber: **VACUUMSCHMELZE GMBH, Bereich
Verträge und Patente Grüner Weg 37 Postfach 2253,
D-6450 Hanau/Main 1 (DE)**

(72) Erfinder: **Grimm, Werner, Dr., Kantstrasse 3,
D- 6450 Hanau 1 (DE)**

## Glimmentladungslampe zur qualitativen und quantitativen Spektralanalyse

Die Erfindung betrifft eine Glimmentladungslampe zur qualitativen und quantitativen Spektralanalyse mit einem kathodenseitig durch eine auf Kathodenpotential befindliche, elektrisch leitende Scheibe abschließbaren Entladungsraum.

Bei Analysen, die beispielsweise zur Produktionsüberwachung oder zur routinemäßigen Materialkontrolle dienen, besteht die Forderung, schnell und ohne großen Arbeitsaufwand die Bestandteile einer Substanz oder deren Konzentration mit kleiner Fehlerbreite zu ermitteln. Oft stehen hierfür auch nur geringe Substanzmengen zur Verfügung.

Als besonders günstig für solche Analysen hat sich die optische Emissionsspektralanalyse unter Ausnutzung des Kathodenglimmlichtes der zu untersuchenden Substanzen erwiesen. Als Arbeitsgas zur Erzeugung der Glimmentladung verwendet man im allgemeinen Edelgas, vorzugsweise Argon.

Als Lichtquelle zur Erzeugung des Kathodenglimmlichtes ist bereits eine Glimmentladungslampe bekannt, bei welcher der Anodenkörper kathodenseitig einen mit dem Anodenkörper verbundenen, elektrisch leitenden Stutzen besitzt und eine Scheibe aus elektrisch leitendem Material gegen die der Anode abgewandte Seite des den Stutzen umschließenden Kathodenkörpers gedrückt wird, wobei der Abstand zwischen Stutzen und der praktisch ebenen Oberfläche der Scheibe 0,05 bis 0,5 mm beträgt. Das Arbeitsgas wird bei dieser Glimmentladungslampe durch den Spalt zwischen dem Stutzen und der Oberfläche der Scheibe abgepumpt. Die Scheibe kann selbst ganz oder teilweise aus der zu analysierenden Substanz bestehen oder, falls diese flüssig ist, mit dieser getränkt sein. Ferner kann die zu analysierende Substanz auch auf die Scheibe aufgebracht sein oder, falls sie gasförmig ist, dem Arbeitsgas beigemischt werden (DE-PS 1 589 389). Weiterhin kann die Scheibe auch mit einer oder mehreren Bohrungen zur Aufnahme von drahtförmigen zu analysierenden Proben versehen sein (DE-PS 1 910 461).

Beim Betrieb dieser bekannten Glimmentladungslampe bildet sich über der auf Kathodenpotential liegenden Scheibe ein Kathodenglimmlicht hoher Lichtstärke, das durch die Bohrung des Anodenstutzens begrenzt wird. Die infolge des Beschusses mit Arbeitsgasionen kontinuierlich zerstäubte oder bereits in Gasform dem Arbeitsgas beigemischte zu analysierende Substanz wird im Kathodenglimmlicht zum Leuchten angeregt und läßt sich in diesem Zustand spektralanalytisch nachweisen und quantitativ bestimmen.

Die Analysengenauigkeit steigt dabei mit zunehmender Intensität der Spektrallinien, also verstärkter Anregung der Atome der zu analysierenden Substanz, an. Um eine solche verstärkte Anregung zu erreichen, wurde bereits bei einer Glimmentladungslampe der bekannten Art zusätzlich zur Glimmentladung eine Hochstrom-Niederspannungs-Entladung vorgesehen. Durch diese zusätzliche Entladung wird die Elektronendichte im Entladungsraum und damit die Stoßzahl der Elektronen mit den Atomen der zu analysierenden Substanz erhöht. Der Aufbau der Glimmentladungslampe wird durch diese zusätzliche Entladung jedoch verhältnismäßig kompliziert, da zwei zusätzliche Elektroden erforderlich sind, die in unmittelbar am Entladungsraum mündende Glasröhrchen eingeschmolzen sind (Spectrochimica Acta 31 B (1976), Seiten 257 bis 261). Ferner ist es bei Hohlkathodenlampen bekannt, die Kathode in zwei Halbschalen zu teilen, die durch eine Kleberschicht elektrisch isoliert und zusammengehalten werden. Hierbei kann die innere Kathodenhalbschale als Steuerelektrode ausgebildet sein (DE-OS 1 905 318). Eine solche Steuerelektrode hat jedoch infolge der durch die Hohlkathodenform bedingten Entladungsverhältnisse auf die Intensität der Spektrallinien nur wenig Einfluß. Eine Hohlkathodenlampe für die Emissionsspektralanalyse mit einer die Anwendung hoher Spannungen ermöglichenden Steuerelektrode ist ferner aus Spectrochimica Acta 27 B (1972), Seiten 537 bis 544 bekannt. Der Aufbau dieser bekannten Hohlkathodenlampe ist jedoch durch die Aufteilung des Entladungsraums vor der Kathode und des Probenraums hinter der Kathode in getrennte Gebiete mit unterschiedlichem Unterdruck recht aufwendig. Für Analysen, die insbesondere der routinemäßigen Produktionsüberwachung dienen, ist es ferner als nachteilig anzusehen, daß die eigentliche Kathode zur Aufnahme von pulver- oder spanförmigen zu analysierenden Proben eine Bohrung aufweist oder aber, wenn sie selbst aus dem zu untersuchenden Material bestehen soll, vorher aus diesem töpfchenförmig herausgearbeitet werden muß.

Schließlich sind in der nicht vorveröffentlichten EP-A-0 004 962 Glimmentladungslampen zur optischen Spektralanalyse mit einem kathodenseitig durch eine auf Kathodenpotential befindliche, elektrisch leitende Scheibe abschließbaren Entladungsraums vorgeschlagen worden, bei denen zur Erhöhung der Lichtintensität und der Analysengenauigkeit Mittel zum Erzeugen eines im Entladungsraum im wesentlichen in axialer Richtung verlaufenden Magnetfeldes vorgesehen sind. Diese können insbesondere aus einem in axialer Richtung magnetisierten Ringmagneten aus Dauermagnetmaterial bestehen. Koaxial zu diesem Ringmagneten kann ferner noch zusätzlich ein regelbarer Elektromagnet angeordnet werden. Durch entsprechende Regelung des Elektromagneten, beispielsweise auf einen konstanten Entladungsstrom, können durch Probenunterschiede bedingte Analysenfehler verringert werden.

Der Erfindung liegt die Aufgabe zugrunde, bei einer Glimmentladungslampe der eingangs erwähnten Art die Intensität der Spektrallinien der zu analysierenden Substanz weiter zu erhöhen, um damit auch den durch die Analyse erfaßbaren Spurenbereich zu erweitern.

Diese Aufgabe wird erfindungsgemäß dadurch gelöst, daß Mittel zum Erzeugen eines im Entladungsraum im wesentlichen in axialer Richtung verlaufenden Magnetfeldes und zusätzlich eine gegenüber dem Anodenkörper isolierte, koaxial im anodenseitigen Teil des Entla- dungsraumes angeordnete Steuerelektrode vor- gesehen sind, wobei die Steuerelektrode ein gegenüber der Anode positives Potential aufweist.

Durch das Magnetfeld werden die im Entladungsraum vorhandenen freien Elektronen auf Spiralbahnen gezwungen. Dadurch wird der Weg der Elektronen zur Anode verlängert und ihre Stoßzahl mit den im Gasentladungsplasma des Kathodenglimmlichts befindlichen Atomen der zu analysierenden Substanz noch weiter erhöht. Durch das zusätzliche elektrische Feld der Steuerelektrode, die gegenüber dem auf Erdpotential liegenden übrigen Anodenkörper ein positives Potential aufweist, werden nun doch die freien Elektronen in Richtung des überlagerten Feldes angesaugt, beziehungsweise nachbeschleunigt. Ein Teil der Elektronen, die als Primärelektronen aus der Kathode stammen, beziehungsweise als Sekundärelektronen im Gasentladungsplasma entstehen, erreicht dadurch die notwendige Anregungsenergie und kann somit an einer weiteren Stoßanregung mit den im Gasentladungsplasma des Kathodenglimmlichts befindlichen Atomen der zu analysierenden Substanz teilnehmen. Insgesamt führt dies zu einer erheblich verstärkten Erzeugung von Sekundärelektronen und Ionen und damit zu einer unerwartet hohen Verstärkung der Intensität der elementspezifischen Spektrallinien. Die Ionen, die die Zerstäubung der Kathodensubstanz bewirken, werden wegen ihrer sehr viel größeren Masse vom Magnetfeld nur wenig beeinflußt. Aufgrund ihrer Beschleunigung im elektrischen Feld des Kathodenfallgebietes tragen sie jedoch zu einem verstärkten Materialabbau der in oder auf der elektrisch leitenden Scheibe befindlichen, zu analysierenden Substanz bei. Dies erlaubt, sofern die zu analysierende Substanz nicht gerade in Gasform vorliegt, eine Reduzierung des Arbeitsdruckes von den bisher meist üblichen Werten von 800 bis 1200 Pa auf beispielsweise 130 bis 530 Pa.

Eine bevorzugte Ausführungsform der erfin- dungsgemäßen Glimmentladungslampe ist der- art ausgebildet, daß die gegenüber dem Anodenkörper isolierte, koaxial im anodenseitigen Teil des Entladungsraumes angeordnete Steuerelektrode anodenseitig innerhalb des Anodenkörpers an einem als Elektrodenhalterung dienenden rohrförmigen Einsatz befestigt ist, der ebenfalls gegenüber dem Anodenkörper isoliert ist.

Die Steuerelektrode kann an den Einsatz angelötet oder vorzugsweise auch in diesen eingeschraubt werden, wodurch die Auswechselbarkeit erleichtert wird. Günstig ist es, wenn der Einsatz zur Wärmeableitung aus einem gut wärmeleitenden Material, beispielsweise aus einer Kupferlegierung, wie Messing oder Leitbronze, besteht und wenigstens eine Bohrung in der Bohrwandung des Einsatzes zum besseren Abpumpen des eingeleiteten Arbeitsgases aufweist. Ferner verhindert eine solche Bohrung, insbesondere wenn sie sich am kathodenseitigen Teil des Einsatzes befindet, daß das Gasentladungsplasma durch Konvektion am anodenseitigen Ende der Steuerelektrode abgerissen wird.

Besonders günstig ist es, wenn sich die lichte Weite der Rohröffnung des Einsatzes mit zunehmendem Abstand von der Steuerelektrode erweitert. Ein derart geformter Einsatz als Elektrodenhalterung ermöglicht ein wirbelfreies Einleiten des Arbeitsgases in den Entladungsraum und hat auch Vorteile für den Lichtweg aus dem Entladungsraum zum Spektrometer.

Bei einer weiteren bevorzugten Ausführungs- form der erfindungsgemäßen Glimmentladungs- lampe kann das Magnetfeld im Entladungsraum durch Elektromagnete oder Dauermagnete erzeugt werden, wobei sich zur Erzeugung des Magnetfeldes im Entladungsraum Dauermagnete als besonders günstig erwiesen haben.

Bei einer insbesondere wegen ihres einfachen Aufbaues bevorzugten Ausführungsform der erfindungsgemäßen Glimmentladungslampe ist ein den Entladungsraum umschließender, in axialer Richtung magnetisierter Ringmagnet aus Dauermagnetmaterial vorgesehen.

Besonders günstig ist es, wenn der Ringmagnet aus einer Kobalt-Seltenerd-Legierung be- steht. Die außerordentlich hohe Koerzitivfeld- stärke der Polarisation derartiger Materialien machen eine Entmagnetisierung durch Gegenfelder praktisch unmöglich. So haben zum Beispiel Dauermagnete aus einer Legierung der Zusammensetzung $SmCo_5$ ein sehr hohes maxi- males Energieprodukt $(BH)_{max} > 150$ kJ/m$^3$, eine Remanenzinduktion $B_r > 0,85$ T und eine Koerzi- tivfeldstärke $_JH_c > 15\,000$ A/cm.

Das Magnetfeld im Entladungsraum läßt sich vorteilhaft durch Mittel zur Konzentration des magnetischen Flusses im Entladungsraum weiter erhöhen. So kann vorteilhaft am Ringmagneten kathodenseitig ein Polring angebracht sein, der den magnetischen Fluß zum Entladungsraum hin konzentriert. Ferner kann auch an der von der Kathodenseite abgewandten Seite des Ringmagneten vorteilhaft ein Polring vorgesehen sein. Besonders günstig für den Magnetfeldverlauf ist es, wenn sich die Mittelöffnung des kathodenseitigen Polrings mit zunehmendem Abstand vom Ringmagneten verengt. Ein derart geformter Polring konzentriert und stabilisiert das Magnetfeld im Entladungsraum und führt es gleichzeitig so nahe wie möglich an die Scheibenoberfläche heran. Der Abstand zwischen dem auf Anodenpotential befindlichen kathodenseitigen Polring und der anodenseitigen Oberfläche der auf Kathodenpotential befindlichen Scheibe sollte so klein wie möglich sein. Der günstigste Abstand beträgt, um häufige Kurzschlüsse zu vermeiden, etwa 0,1 bis 0,3 mm.

Um Verzerrungen und Feldstärkenänderungen des Magnetfeldes durch aus der zu analysierenden Substanz bestehende oder diese enthaltende elektrisch leitende Scheiben unterschiedlicher Abmessung aus ferromagnetischem Material zu vermeiden, kann ferner vorzugsweise zwischen Anodenkörper beziehungsweise Ringmagnet und der auf Kathodenpotential befindlichen Scheibe eine ringförmige Abschirmplatte aus weichmagnetischem Material angeordnet sein. Diese Abschirmplatte kann sich auf Kathodenpotential oder auf Anodenpotential befinden, je nachdem, ob sie vom Anodenkörper oder von der Scheibe durch eine Isolation getrennt ist.

Durch die im Entladungsraum auftretende Temperatur wird das vom Dauermagneten erzeugte Magnetfeld verändert. Der Temperatureinfluß auf das Magnetfeld wird durch den reversiblen Temperaturkoeffizienten der Remanenz ausgedrückt, der beispielsweise bei $SmCo_5$ zwischen 25 und 250°C etwa $-0,05\%/K$ beträgt. Zur Temperaturstabilisierung des Magnetfeldes kann der den Entladungsraum umschließende Ringmagnet vorteilhaft mittels Flüssigkeit kühlbar sein. Besonders günstig ist es, wenn der Anodenkörper aus einem gut wärmeleitenden Material besteht und wenigstens ein den Ringmagneten umschließender Kühlkanal vorgesehen ist. Die Temperaturstabilität des Magnetfeldes kann weiter noch dadurch verbessert werden, daß der Ringmagnet vom Entladungsraum durch ein Schutzrohr aus gut wärmeleitendem Material getrennt ist.

Anhand einiger Figuren und Ausführungsbeispiele soll die Erfindung noch näher erläutert werden.

Figur 1 zeigt schematisch im Schnitt eine bevorzugte Ausführungsform der erfindungsgemäßen Glimmentladungslampe mit einem Ringmagneten aus Dauermagnetmaterial.

Figur 2 zeigt schematisch im Schnitt eine weitere bevorzugte Ausführungsform der erfindungsgemäßen Glimmentladungslampe.

Figur 3 zeigt den Entladungsstrom in Abhängigkeit von der Steuerspannung bei einer Glimmentladungslampe gemäß Figur 1, mit dem Abstand der Steuerelektrode von der Kathodenfläche als Parameter.

Figur 4 zeigt die Abhängigkeit des Verstärkungsfaktors der Intensität der Kupfer- und Nickel-Linie von der Kathodenspannung (untere Kurven) und in Abhängigkeit von der Steuerspannung bei einer konstanten Kathodenspannung von 0,8 kV (obere Kurven) bei einer Glimmentladungslampe gemäß Figur 1.

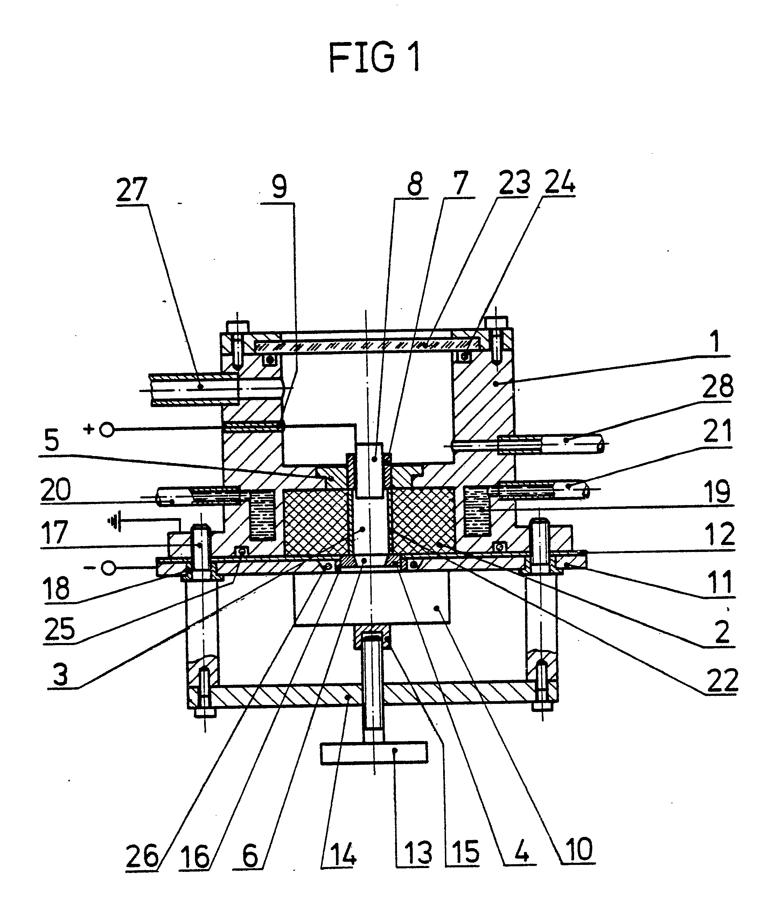

Bei der in Figur 1 dargestellten Ausführungsform der erfindungsgemäßen Glimmentladungslampe ist in einen Anodenkörper 1 mit kreisförmiger Grundfläche, der aus einem gut wärmeleitenden Material, beispielsweise aus Leitbronze oder einer Kupfer-Beryllium-Legierung besteht, ein in axialer Richtung magnetisierter Ringmagnet 2 eingepaßt. Dieser kann vorzugsweise aus einer $SmCo_5$-Legierung bestehen, etwa 15 mm dick sein und einen Außendurchmesser von 40 mm sowie einen Innendurchmesser von 10 mm haben. Das vom Ringmagneten 2 erzeugte Magnetfeld verläuft im Entladungsraum 3 im wesentlichen parallel zu dessen Mittelachse. Zur weiteren Konzentration des magnetischen Flusses im Entladungsraum 3 dienen zwei Polringe 4 und 5 an der Kathodenseite beziehungsweise an der von dieser abgewandten Seite des Ringmagneten 2. Die Mittelöffnung 6 des Polrings 4 verengt sich mit zunehmendem Abstand vom Ringmagneten 2 und bewirkt daher eine besonders starke Konzentration des Magnetfeldes im Entladungsraum 3, insbesondere in dessen kathodennahem Bereich. In den Polring 5 ist eine Isoliermuffe 7, beispielsweise aus Polytetrafluoräthylen, eingepaßt. In ihr befindet sich koaxial zum Entladungsraum 3 eine etwa 10 mm lange Steuerelektrode 8, deren Außendurchmesser etwa 7 mm und deren Innendurchmesser 6 mm beträgt. Als Material für die Steuerelektrode 8 eignen sich vorzugsweise gut wärmeleitende Materialien, beispielsweise Kupferlegierungen, wie Leitbronze oder Messing. Es können aber auch ferromagnetische Materialien verwendet werden, die dann für einen noch günstigeren Magnetfeldverlauf im Entladungsraum 3 sorgen. Die Steuerelektrode 8 ist über eine vakuumdichte und gegenüber dem Anodenkörper 1 isolierte Durchführung 9 mit einer regelbaren Gleichspannungsquelle verbunden, die beispielsweise Ausgangsspannungen zwischen 0 und 150 V bei einem maximalen Gleichstrom von etwa 0,3 A zuläßt. Die Regelung des Stromes durch die Steuerelektrode kann dabei derart erfolgen, daß durch die Glimmentladungslampe unabhängig von der durch die unterschiedlichen Proben bedingte Abweichung ein konstanter, vorgewählter Entladungsstrom fließt. Man kann aber beispielsweise auch von der Lichtintensität der Entladung ausgehen und die Lichtemission dann auf optoelektronischem Wege auf einen konstanten Wert der Intensität regeln. Zwischen der beispielsweise aus der zu analysierenden Substanz bestehenden, elektrisch leitenden auf Kathodenpotential befindlichen Scheibe 10 und dem Ringmagneten 2 beziehungsweise dem Anodenkörper 1 ist ferner eine ringförmige Abschirmplatte 11 aus weichmagnetischem Material vorgesehen, die einen Übertritt der den Ringmagneten 2 außen umfassenden Feldlinien in die Scheibe 10 und damit Feldverzerrungen aufgrund unterschiedlicher Größen oder Lagen der Scheibe 10 verhindert. Als Material für die Polringe 4 und 5 und die Abschirmplatte 11 eignen sich vorzugsweise weichmagnetische Legierungen mit hoher Sättigung, beispielsweise ein Magnetreineisen mit einer Sättigungsinduktion von 2,15 T oder eine Kobalt-Eisen-Legierung aus etwa 49 Gew.-% Kobalt, 2 Gew.-% Vanadium, Rest Eisen mit einer Sättigungsinduktion von etwa 2,35 T.

Die Abschirmplatte 11 ist vom Ringmagneten 2 und vom Anodenkörper 1 durch eine ringförmige, beispielsweise 0,1 mm dicke, Isolierscheibe 12 getrennt und befindet sich auf Kathodenpotential. Die Scheibe 10 wird mittels einer Andruckschraube 13, die in einer Halterung 14 geführt und mittels einer Isolierkappe 15 gegen die Scheibe 10 isoliert ist, gegen ein ringförmiges Isolierteil 16 gepreßt, das kathodenseitig am Ringmagneten 2 angeordnet ist und beispielsweise 2 mm dick sein kann. Die Isolierscheibe 12, das Isolierteil 16 und die Isolierkappe 15 können beispielsweise aus Polytetrafluoräthylen bestehen. Der Anodenkörper 1 und die Abschirmplatte 11 werden durch zwei Schraubenansätze 17 zusammengehalten, die sich an den Enden der Seitenträger der Halterung 14 befinden und gegen die Abschirmplatte 11 durch Isoliermuffen 18 isoliert sind.

Um die durch die Entladung entstehende Wärme abzuleiten, insbesondere den Ringmagneten 2 auf konstanter Temperatur zu halten, ist im Anodenkörper 1 ein den Ringmagneten 2 umschließender Kühlkanal 19 vorgesehen, wobei der Rohrstutzen 20 zur Zufuhr und der Rohrstutzen 21 zur Abführung des Kühlwassers dient. Ebenfalls zur Wärmeabfuhr dient ein den Ringmagneten 2 vom Entladungsraum 3 trennendes Schutzrohr 22, beispielsweise aus Kupfer mit 0,5 mm Wandstärke.

Spektrometerseitig ist der Anodenkörper 1 durch ein lichtdurchlässiges Fenster 23, beispielsweise aus plangeschliffenem Quarzglas, abgeschlossen. Die O-Ringe 24, 25 und 26 dienen zur vakuumdichten Abdichtung des Innenraumes der Glimmentladungslampe. Das Arbeitsgas, vorzugsweise reinstes Argon, wird zum Betrieb der Glimmentladungslampe kontinuierlich durch den Gaseinlaßstutzen 27 eingeleitet. Der Arbeitsgasdruck wird durch stetiges Abpumpen über den Pumpstutzen 28 eingestellt. Dem eigentlichen Entladungsraum 3 wird das Arbeitsgas dabei durch die von der Kathodenseite abgewandte Öffnung zugeführt, durch die es auch wieder abgeführt wird. Der Probenwechsel kann mit Hilfe der Schraube 13 einfach und sehr rasch erfolgen. Bei jedem Probenwechsel wird zweckmäßigerweise die innere Kante des Polrings 4 mechanisch gereinigt, beispielsweise mit Hilfe einer Messingdrahtbürste, und mit trockener Preßluft abgeblasen. Auch eine gründlichere Reinigung läßt sich durch Abziehen des Polringes 4 und Herausziehen des Schutzrohres 22 schnell und einfach durchführen, ohne daß die Glimmentladungslampe demontiert werden muß.

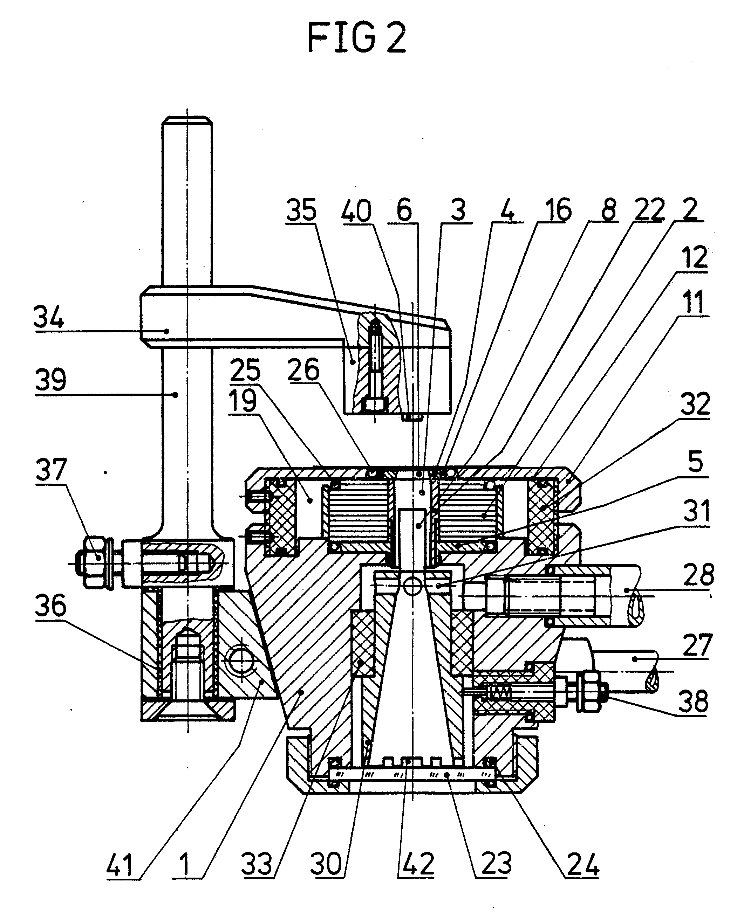

Die in Fig. 2 dargestellte Ausführungsform der erfindungsgemäßen Glimmentladungslampe unterscheidet sich von der Ausführungsform nach Figur 1 im wesentlichen dadurch, daß die Steuerelektrode 8 spektrometerseitig an einem innerhalb des Anodenkörpers 1 angeordneten rohrförmigen Einsatz 30 befestigt ist, der gegenüber dem Anodenkörper durch einen Isolierring 33 isoliert ist. Der Abstand zwischen der Steuerelektrode 8 und den diese umgebenden, auf Anodenpotential befindlichen Teilen ist dabei mindestens so groß, daß beim Betrieb keine elektrischen Überschläge erfolgen können. Durch diese Anordnung wird insbesondere ein Bedampfen der in Figur 1 dargestellten Isoliermuffe 7 verhindert und damit die Gefahr von eventuellen Kurzschlüssen infolge einer Bedampfung vermieden.

Das Arbeitsgas wird durch den Stutzen 27 eingelassen und strömt durch den ringförmigen Zwischenraum zwischen Anodenkörper 1 und Einsatz 30 und die Ausnehmungen 42 in den Einsatz 30 ein und von dort im Gegenstrom durch die Steuerelektrode 8 in den Entladungsraum 3. Wieder abgesaugt wird das Arbeitsgas über den Rohrstutzen 28, teilweise durch den ringförmigen Zwischenraum zwischen Steuerelektrode 8 und Schutzrohr 22, teilweise durch die Bohrungen 31 in der Rohrwandung des Einsatzes 30. Die Bohrungen 31 sorgen dafür, daß das Arbeitsgas wirbelfrei ohne die Gefahr einer zu starken Konvektion am spektrometerseitigen Teil der Steuerelektrode 8 abgesaugt werden kann.

Ein Probenhalter 34 sorgt dafür daß die hier nicht gezeigte, beispielsweise aus der zu analysierenden Substanz bestehende und als Probenkörper dienende elektrisch leitende Scheibe 10 fest an die Abschirmplatte 11 gedrückt wird. An den Probenhalter 34 ist ein handelsübliches Kopfteil 35 angeschraubt, das einen mit Preßluft betätigbaren Andruckstempel 40 enthält. Der Probenhalter 34 ist entlang einer Führungsschiene 39 verschiebbar, die durch eine Isoliermuffe 36 isoliert in einer Halterung 41 sitzt. Die Halterung 41 ist am Anodenkörper 1 befestigt, beispielsweise angelötet. Kathodenseitig kann die erfindungsgemäße Glimmentladungslampe über den Anschluß 37 mit dem negativen Pol einer Gleichspannungsquelle verbunden werden, deren positiver Pol ebenso wie der Anodenkörper auf Erdpotential liegt. Durch eine vakuumdichte, elektrisch isolierte Durchführung 38 ist die Steuerelektrode an eine handelsübliche regelbare Gleichspannungsquelle anschließbar, die beispielsweise auf Ausgangsspannungen zwischen 0 und 150 V einstellbar und für einen maximalen Gleichstrom von 0,3 A ausgelegt ist.

Die übrigen Teile der Glimmentladungslampe nach Figur 2 entsprechen im wesentlichen den mit den gleichen Bezugsziffern bezeichneten Teilen von Figur 1. Allerdings umgibt der Kühlkanal 19 unmittelbar den Ringmagneten 2. Gegenüber der beim Betrieb der Glimmentladungslampe auf Kathodenpotential befindlichen Abschirmplatte 11 sind der Kühlkanal 19 und der Ringmagnet 2 durch die Isolierscheibe 12 und dem Isolierring 32 isoliert.

Die Glimmentladungslampe gemäß Figur 1 wurde bei einem 1,5 m-Gitterspektrometer mit einem Spektralbereich von 200 bis 450 nm eingesetzt. Als Meßproben wurden Scheiben 10 aus der jeweils zu analysierenden Substanz verwendet. Zur Beseitigung von Oberflächenverunreinigungen und zur Einstellung des Temperaturgleichgewichtes der auf Kathodenpotential liegenden Proben wurde bei jeder Messung zunächst 10 sec lang mit einer Gleichspannung von 1000 V und anschließend 90 sec lang mit einer Spannung von 800 V eingebrannt. Der durch die Öffnung 6 des Polrings 4 begrenzte Brennfleckdurchmesser betrug etwa 7 mm. Jeweils gegen Ende des Einbrennens wurde bei einer Kathodenspannung von 800 V und einer Steuerspannung, deren Wert zwischen 0 und etwa 150 V eingeregelt werden konnte, die Messungen durchgeführt. Da die sich einstellende Stromstärke und damit die Menge des abgetragenen Materials und auch die Stärke der Anregung von Probenmaterial abhängt, wurde jeweils solange gemessen, bis die integrierte Ladung einen vorgewählten Weg erreicht hatte. Die eigentliche Meßzeit betrug größenordnungsmäßig etwa 20 sec.

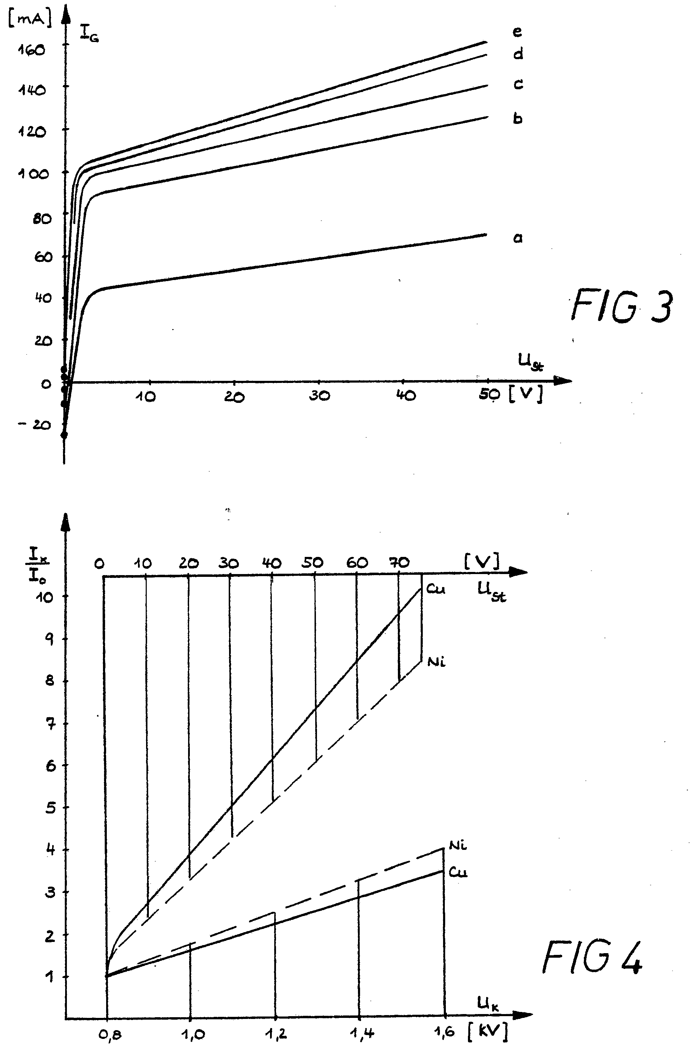

Mit einer Glimmentladungslampe gemäß Figur 1 wurde der Entladungsstrom bei Verwendung einer CuNi44-Probe in Abhängigkeit von der Steuerspannung mit dem Abstand der Steuerelektrode von der Kathodenoberfläche, d. h. der anodenseitigen Oberfläche der Scheibe 10, als Parameter gemessen. Bei den Messungen bestand die auf Kathodenpotential befindliche Scheibe 10 jeweils aus der CuNi44-Probe. Der Arbeitsgasdruck mit Argon als Arbeitsgas betrug konstant 250 Pa, die Kathodenbeschleunigungsspannung war fest auf 800 V eingestellt. Geändert wurde der Abstand der Steuerelektrode 8 von der Kathodenfläche und zwar für einige Werte von 1 bis 10 mm. Das Ergebnis ist in Figur 3 dargestellt. An der Abszisse ist die Steuerspannung $U_{St}$ in V, an der Ordinate der Entladungsstrom $I_G$ in mA aufgetragen. Die Kurven a bis e zeigen die gemessenen Werte bei einem Elektrodenabstand von 1 mm (Kurve a), 3,5 mm (b), 5 mm (c), 8 mm (d) und 10 mm (e). Wie man erkennt, ist der auftretende Entladungsstrom ohne angelegte Steuerspannung (durch Punkte gekennzeichnete Ordinatenwerte) allein durch die Raumladung bedingt. Bei etwa 8 mm Elektrodenabstand geht die Raumladung vom negativen in den positiven Bereich über. Bei einem Elektrodenabstand von etwa 10 mm liegt fast die gesamte Säule des Gasentladungsplasmas räumlich zwischen der Steuerelektrode und der Kathode, so daß sie beim Anlegen eines Potentials an die Steuerelektrode praktisch in ihrer Gesamtheit vom Feld der Steuerelektrode erfaßt wird. Dieser Zustand ist für die hohe Intensität der Anregung besonders günstig. Zusätzlich ist bei dieser Entfernung der optische Öffnungswinkel verkleinert und zugleich wird auch die Gefahr der Bedampfung der Elektrode durch zerstäubtes Probenmaterial verhindert. Ab etwa 5 V Steuerspannung steigt bei allen Kurven der Entladungsstrom linear mit einer weiteren Erhöhung der Steuerspannung an.

In Figur 4 ist noch die Abhängigkeit des Verstärkungsfaktors der Intensität $I_x/I_o$ der Kupferlinie (324,8 nm) und der Nickellinie (349,9 nm) einer CuNi44-Probe von der Kathodenspannung (untere Kurven) und von der Steuerspannung $U_{St}$ bei einer konstanten Kathodenspannung $U_K = 0,8$ kV (obere Kurven) dargestellt. An der unteren Abszissenachse ist die Kathodenspannung in kV, an der oberen Abszissenachse die Steuerspannung in V und an der Ordinatenachse die relative Intensität aufgetragen. Wie die Kurven zeigen, ändert sich der Verstärkungsfaktor bei Erhöhung der Steuerspannung erheblich stärker als in Abhängigkeit von der Kathodenspannung. Die mit einer Steuerelektrode bei etwa 75 V betriebene Glimmentladungslampe ermöglicht somit eine sehr hohe Lichtstärke bei verhältnismäßig geringer elektrischer Leistung. Während die Intensität der Kupferresonanzlinie bei einer konstanten Kathodenspannung von 0,8 kV, einem Arbeitsdruck des Argons von 250 Pa und bei einer Steuerspannung von +5 V gegen die Anode um den Faktor 2 verstärkt wird, erreicht die Intensitätsverstärkung der Kupferlinie bei +75 V sogar den 10fachen Wert. Der Entladungsstrom beträgt ohne Steuerspannung bei 0,8 kV Kathodenspannung 60 mA. Bei +5 V Steuerspannung steigt der Entladungsstrom auf 70 mA und bei +75 V sogar auf 130 mA. Mit diesem Anwachsen der Stromstärken ist zugleich ein verstärkter Materialabbau der Probe (Scheibe 10) durch Kathodenzerstäubung verbunden. Die Anreicherung des Gasentladungsplasmas mit Probenmaterial bedeutet aber eine Verstärkung der Intensität der Spektrallinien und damit höhere analytische Sicherheit.

Die anmeldungsgemäße Glimmentladungslampe kann gegenüber den in den Figuren 1 und 2 dargestellten Ausführungsbeispielen noch weiter abgewandelt werden. So kann beispielsweise die Abschirmplatte 11 auch unmittelbar an den Anodenkörper 1 und den Ringmagneten 2 angrenzen. Sie muß dann von der Scheibe 10 durch Isoliermaterial getrennt sein, da sie sich auf Anodenpotential befindet. Bei dieser Ausführungsform ragt dann kein auf Anodenpotential befindliches Teil der Glimmentladungslampe mehr in einen Raum hinein, der außen von einem auf Kathodenpotential befindlichen Teil umgeben ist. Die Scheibe 10 kann dann bei der Glimmentladungslampe nach Figur 1 über die Andruckschraube 13 und die Halterung 14 mit dem Kathodenpotential verbunden werden. Selbstverständlich muß dann die Isolierkappe 15 entfallen und es müssen ferner die Schraubenansätze 17 auch gegen das Anodenteil 1 beispielsweise mittels Isolierhülsen isoliert werden.

Ferner kann, wie dies bereits für eine Glimmentladungslampe ohne Steuerelektrode vorgeschlagen wurde, vorteilhaft koaxial zum Ringmagneten aus Dauermagnetmaterial zusätzlich ein regelbarer Elektromagnet vorgesehen sein, dessen regelbares Magnetfeld sich dem Magnetfeld des Dauermagneten überlagert.

Besonders günstig für das Zusammenwirken zwischen Dauermagnet und Elektromagnet ist es, wenn der Ringmagnet und der Elektromagnet in axialer Richtung hintereinander innerhalb des Anodenkörpers angeordnet sind. Insbesondere ergeben sich günstigere Verhältnisse bezüglich der Streuung des Magnetfeldes als bei einem Elektromagneten, der den Dauermagneten außen umschließt.

Die elektrisch leitende Scheibe 10 kann ebenso wie bei den bekannten Glimmentladungslampen ganz oder teilweise aus der zu analysierenden Substanz bestehen, eine Oberflächenschicht aus dieser Substanz aufweisen, mit der Substanz getränkt sein oder drahtförmige Proben der Substanz in entsprechenden Bohrungen enthalten. Man wird in den letztgenannten Fällen ebenso wie bei der Analyse von gasförmigen Substanzen, die dem Arbeitsgas beigemischt werden, vorzugsweise ein Scheibenmaterial verwenden, das selbst nicht besonders stark verdampft wird und die Analyse möglichst wenig stört.

**Patentansprüche**

1. Glimmentladungslampe zur qualitativen und quantitativen Spektralanalyse mit einem kathodenseitig durch eine auf Kathodenpotential befindliche, elektrisch leitende Scheibe abschließbaren Entladungsraum, dadurch gekennzeichnet, daß Mittel zum Erzeugen eines im Entladungsraum (3) im wesentlichen in axialer Richtung verlaufenden Magnetfeldes und zusätzlich eine gegenüber dem Anodenkörper (1) isolierte, koaxial im anodenseitigen Teil des Entladungsraumes (3) angeordnete Steuerelektrode (8) vorgesehen sind, wobei die Steuerelektrode (8) ein gegenüber der Anode positives Potential aufweist.

2. Glimmentladungslampe nach Anspruch 1, dadurch gekennzeichnet, daß die Steuerelektrode (8) anodenseitig innerhalb des Anodenkörpers (1) an einem isoliert angeordneten rohrförmigen Einsatz (30) befestigt ist.

3. Glimmentladungslampe nach Anspruch 2, dadurch gekennzeichnet, daß der Einsatz (30) aus einem gut wärmeleitenden Material besteht und wenigstens eine Bohrung (31) in seiner Rohrwandung aufweist.

4. Glimmentladungslampe nach Anspruch 2 oder 3, dadurch gekennzeichnet, daß sich die lichte Weite der Rohröffnung des Einsatzes (30) mit zunehmendem Abstand von der Steuerelektrode (8) erweitert.

5. Glimmentladungslampe nach einem der Ansprüche 1 bis 4, dadurch gekennzeichnet, daß ein den Entladungsraum (3) umschließender, in axialer Richtung magnetisierter Ringmagnet (2) aus Dauermagnetmaterial vorgesehen ist.

6. Glimmentladungslampe nach Anspruch 5, dadurch gekennzeichnet, daß der Ringmagnet (2) aus einer Kobalt-Seltenerd-Legierung besteht.

7. Glimmentladungslampe nach einem der Ansprüche 1 bis 6, dadurch gekennzeichnet, daß zusätzlich Mittel (4, 5) zur Konzentration des magnetischen Flusses im Entladungsraum (3) vorgesehen sind.

8. Glimmentladungslampe nach Anspruch 7, dadurch gekennzeichnet, daß am Ringmagneten (2) kathodenseitig ein Polring (4) angebracht ist.

9. Glimmentladungslampe nach Anspruch 8, dadurch gekennzeichnet, daß auch an der von der Kathodenseite abgewandten Seite des Ringmagneten (2) ein Polring (5) vorgesehen ist.

10. Glimmentladungslampe nach Anspruch 8, dadurch gekennzeichnet, daß sich die Mittelöffnung (6) des Polrings (4) mit zunehmendem Abstand vom Ringmagneten (2) verengt.

11. Glimmentladungslampe nach einem der Ansprüche 5 bis 10, dadurch gekennzeichnet, daß zwischen dem Anodenkörper (1) beziehungsweise Ringmagneten (2) und der Scheibe (10) eine ringförmige Abschirmplatte (11) aus weichmagnetischem Material angeordnet ist.

12. Glimmentladungslampe nach einem der Ansprüche 1 bis 11, dadurch gekennzeichnet, daß der Entladungsraum (3) mittels Flüssigkeit kühlbar ist.

13. Glimmentladungslampe nach Anspruch 5 und 12, dadurch gekennzeichnet, daß der Anodenkörper (1) aus einem gut wärmeleitenden Material besteht und wenigstens ein den Ringmagneten (2) umschließender Kühlkanal (19) vorgesehen ist.

14. Glimmentladungslampe nach Anspruch 13, dadurch gekennzeichnet, daß der Ringmagnet (2) vom Entladungsraum (3) durch ein Schutzrohr (22) aus einem gut wärmeleitenden Material getrennt ist.

**Claims**

1. A glow discharge lamp for qualitative and quantitative spectrum analysis having a discharge chamber at the cathode end which can be sealed by an electrically conductive disc connected to cathode potential, characterised in that means are provided for producing a magnetic field which runs essentially in the axial direction in the discharge chamber, and a control electrode (8) is in addition provided, which is insulated from the anode body (1) and is coaxially arranged in the anode-end part of the discharge chamber (3), the control electrode (8) having a potential which is positive relative to the anode.

2. A glow discharge lamp as claimed in Claim 1, characterised in that, inside the anode body (1) at the anode end, the control electrode (8) is secured to a tubular insert (30) which is arranged in insulated fashion.

3. A glow discharge lamp as claimed in Claim 2, characterised in that the insert (30) consists of a material which conducts heat well, and has at least one bore (31) in the tube wall.

4. A glow discharge lamp as claimed in Claim 2 or Claim 3, characterised in that the internal with of the tubular bore of the insert (30) increases with increasing distance from the control electrode (8).

5. A glow discharge lamp as claimed in one of Claims 1 to 4, characterised in that an annular magnet (2) is provided, which consists of permanent magnetic material, is magnetized in the axial direction and surrounds the discharge chamber (3).

6. A glow discharge lamp as claimed in Claim 5, characterised in that the annular magnet (2) consists of a cobalt-rare earth alloy.

7. A glow discharge lamp as claimed in one of Claims 1 to 6, characterised in that means (4, 5) are additionally provided for concentrating the magnetic flux in the discharge chamber (3).

8. A glow discharge lamp as claimed in Claim 7, characterised in that a pole ring (4) is fixed on the annular magnet (2) at the cathode side.

9. A glow discharge lamp as claimed in Claim 8, characterised in that a pole ring (5) is also provided at the side of the annular magnet (2) which faces away from the cathode.

10. A glow discharge lamp as claimed in Claim 8, characterised in that the central opening (6) of the pole ring (4) narrows with increasing distance from the annular magnet (2).

11. A glow discharge lamp as claimed in one of Claims 5 to 10, characterised in that an annular screening plate (11) made od a soft-magnetic material, is arranged between the anode body (1), or the annular magnet (2), and the disc (10).

12. A glow discharge lamps as claimed in one of Claims 1 to 11, characterised in that the discharge chamber (3) can be cooled by means of a liquid.

13. A glow discharge lamp as claimed in Claims 5 and 12, characterised in that the anode body (1) consists of a material which conducts heat well, and that at least one cooling channel (19) surrounds the annular magnet (2) is provided.

14. A glow discharge lamp as claimed in Claim 13, characterised in that the annular magnet (2) is separated from the discharge chamber (3) by a protective tube (22) made of a material which conducts heat well.

**Revendications**

1. Lampe à décharge à lueur pour l'analyse spectrale qualitative et quantitative avec une chambre de décharge susceptible d'être fermée côté cathode par une plaque électriquement conductrice se trouvant au potentiel de la cathode, l'ampe caractérisé en ce qu'il est prévu des moyens pour engendrer un champ magnétique s'étendant essentiellement en direction axiale dans la chambre de décharge (3), tandis qu'il est prévu en outre, une électrode de commande (8) disposée co-axialement dans la partie côté anode de la chambre de décharge (3) et isolée par rapport au corps d'anode (1), l'électrode de commande (8) présentant par rapport à l'anode un potentiel positif.

2. Lampe à décharge à lueur selon la revendication 1, caractérisée en ce que l'électrode de commande (8) est fixée côté anode à l'intérieur du corps d'anode (1) sur une garniture tubulaire (30) isolée.

3. Lampe à décharge à lueur selon la revendication 2, caractérisée en ce que la garniture (30) est constituée d'un matériau de bonne conductibilité thermique et comporte au moins un perçage (31) dans sa paroi tubulaire.

4. Lampe à décharge à lueur selon la revendication 2 ou 3, caractérisée en ce que la section libre de l'ouverture tubulaire de la garniture (30) augmente lorsqu'augmente la distance à l'électrode de commande (8).

5. Lampe à décharge à lueur selon l'une des revendications 1 à 4, caractérisée en ce qu'il est prévu un aimant annulaire (2) en matériau magnétique permanent, magnétisé selon la direction axiale, et entourant la chambre de décharge (3).

6. Lampe à décharge à lueur selon la revendication 5, caractérisée en ce que l'aimant annulaire (2) est constitué d'un alliage cobalt-terre rare.

7. Lampe à décharge à lueur selon l'une des revendications 1 à 6, caractérisée en ce qu'il est prévu des moyens supplémentaires (4, 5) pour concentrer le flux magnétique dans la chambre de décharge (3).

8. Lampe à décharge à lueur selon la revendication 7, caractérisée en ce qu'un anneau polaire (4) est rapporté côté cathode contre l'aimant annulaire (2).

9. Lampe à décharge à lueur selon la revendication 8, caractérisée en ce qu'un anneau polaire (5) est également prévu contre le côté opposé au côté cathode de l'aimant annulaire (2).

10. Lampe à décharge à lueur selon la revendication 8, caractérisée en ce que l'ouverture médiane (6) de l'anneau polaire (4) se rétrécit lorsqu'augmente la distance à l'aimant annulaire (2).

11. Lampe à décharge à lueur selon l'une des revendications 5 à 10, caractérisée en ce que, entre le corps d'anode (1) ou éventuellement l'aimant annulaire (2), et la plaque (10) est disposée une plaque annulaire de blindage (11) en un matériau faiblement magnétique.

12. Lampe à décharge à lueur selon l'une des revendications 1 à 11, caractérisée en ce que la chambre de décharge (3) est susceptible d'être refroidie au moyen d'un liquide.

13. Lampe à décharge à lueur selon les revendications 5 et 12, caractérisée en ce que le corps d'anode (1) est constitué d'un matériau de bonne conductibilité thermique et en ce qu'il est prévu au moins un canal de refroidissement (19) entourant l'aimant annulaire (2).

14. Lampe à décharge à lueur selon la revendication 13, caractérisée en ce que l'aimant annulaire (2) est séparé de la chambre de décharge (3) par un tube de protection (22) en un matériau de bonne conductibilité thermique.

# FIG 1

# FIG 2

0 015 391

FIG 3

FIG 4